# EUROPEAN PATENT SPECIFICATION

(11) **EP 2 404 740 B1**
(45) Date of publication and mention of the grant of the patent: **19.10.2016**
(21) Application number: 11169616.7
(22) Date of filing: 13.11.2009
(51) Int. Cl.: B29C 65/00, B29C 65/50

(54) **Method and apparatus for joining composite structural members**
Verfahren und Vorrichtung zum Verbinden von Verbundstoffstrukturelementen
Procédé et appareil pour assembler des éléments structurels composites

(30) Priority: 13.11.2008 US 270682
(43) Date of publication of application: 11.01.2012
(62) Divisional of application: 09176006.6
(73) Proprietor: The Boeing Company, Chicago, IL 60606-1596 (US)
(72) Inventor: Day, Dan D., Seattle, WA Washington 98126-2425 (US); Meyer, Robert G., Renton, WA Washington 98058-4747 (US); Perla, Luis A., Sammamish, WA Washington 98075 (US); Ransom, Richard A., Fall City, WA Washington 98024 (US); Holland, Justin L., Algona, WA Washington 98001 (US); Lund, Erik, Burien, WA Washington 98166 (US); Warren, Joseph F., Renton, WA Washington 98058-0940 (US); Kline, William Thomas, Seattle, WA Washington 98148-1837 (US); Vanvoast, Peter J., Seattle, WA Washington 98116 (US); Kennedy, Thomas J., Bonney Lake, WA Washington 98391 (US); Groth, Curtis M., Seattle, WA Washington 98126 (US); Hu, Charles Y., Newcastle, WA Washington 98059 (US); Butler, Geoffrey A., Seattle, WA Washington 98104 (US); Nelson, Charles J., Clyde Hills, WA Washington 98004-3414 (US); Phung, Thang D., Burien, WA Washington 98148-1837 (US)
(74) Representative: Howson, Richard G.B.

(56) References cited:
- FR-A- 1 308 557
- FR-A1- 2 710 871
- JP-A- S5 979 730
- US-A- 2 960 147
- US-A- 3 553 043
- MENGES G ET AL: "AUF DEM WEG ZU AUTOMATISIERBAREN FUEGEVERFAHREN", PLASTVERARBEITER, HUETHIG GMBH, HEIDELBERG, DE, vol. 38, no. 12, 1 December 1987 (1987-12-01), pages 41-47, XP002048855, ISSN: 0032-1338
- CARSTEN RAINER NETZE: "Ultraschallschweissen von hochtemperaturbeständigen, unverstärkten, kurzglasfaser- und endlosfaserverstärkten Thermoplasten = Ultrasonic welding of advanced, not reinforced, short and continuous fibre reinforced thermoplastics", DISSERTATION,, 1 January 1993 (1993-01-01), page 83PP, XP007914444,

## Description

### TECHNICAL FIELD

This disclosure generally relates to composite structures, and deals more particularly with a method and apparatus for joining composite sections together using bonded splices, as well as composite structural members made thereby.

### BACKGROUND

In order to produce relatively long composite structural members, composite sections are sometimes joined together using a splice joint. For example, in the aircraft industry, relatively long wing stringers, spars, frames, and other complex composite geometries may be formed by joining two or more long composite sections together using a metal splice member and fasteners. However, metal splice members may be undesirable for a number of assembly reasons.

It may be possible to join composite structural member using composite splice members. However, it may not be practical to form composite splice joints between long composite sections because commercial autoclaves may not be large enough to accommodate the length of relatively long parts, such as wing stringers, spars, and frames.

Accordingly, there is a need for a method and apparatus for joining structural members such as stringer, spar, and frame sections that allow the use of composite splice members. There is also a need for composite structural members formed from composite sections joined together by composite splice members.

FR2710871 discloses a method of joining elements made of composite material. This method consists in producing a stepped preform, the geometry of the steps of which depends on the nature of the composite material to be made and on the type of structure, and then in stacking in succession the layers of composite material at the border of the steps of the preform.

Document "On the way to automated joining processes" by Menges G et al discloses joining carbon fiber pieces by way of electrodes to induce current in the carbon fibre which in turn provides a heating effect on the surface of the carbon fibre which melts glue to join the carbon fiber pieces.

US2960147A discloses a heat sealing device for joining plastic sheets comprising: a supporting assembly having an elongated generally U-shaped body, the opposite arms of which include flat end surfaces forming a first plane wherein the plastic sheets to be joined may be supported; an electrical winding wrapped around the cross member of the U-shaped body for operating the U-shaped body as an electromagnet; a supporting member of insulating material extending across the arms of the U-shaped body for supporting the plastic sheets at the area to be joined; a heating element contained in said supporting member for heating the plastic to a molten state at said area; a pressurizing assembly; and a fluid-expansible bag having an opening for introducing an inflating fluid to cause the bag to conform to and confine the plastic at the area to be joined, and having an additional opening whereby a cooling fluid can be passed through the bag at the conclusion of the splice to cool the said area.

FR1308557A discloses a method of producing a seal of greater length between two strips of vulcanized rubber cloth, characterized in that the edges of the two cut strips which optionally are arranged slightly spaced apart parallel to one another and with at least one strip of raw rubber or raw rubber cloth interposed between the two edges so as to slightly overflow on the strip which is on each side of the seal, said seal being formed while applied uniformly over its entire length against a heating surface of vulcanization using a membrane subjected to a fluid pressure.

US3553043A discloses a method of bonding uncured silicone rubber and glass to each other by using flexible, resilient or elastic membranes actuated by heated pressurized fluid to press the glass and rubber into intimate contact with each other while at least partially curing the rubber by heat supplied thereto through the membranes from the heated fluid.

JPS5979730A discloses an upper fixing platen that is brought toward a lower one to pressurize fiberglass reinforced plastic moulded products, each having a polyurethane adhesive layer formed thereto with hoses being closely contacted to the fiberglass reinforced plastic moulded products. The heating medium in each hose is a liquid so that said medium is uniformly repulsed to the inner surface of the hose and, as a result, uniform heat transfer is performed to the outer surfaces of the fiberglass reinforced plastic moulded products.

### SUMMARY

The disclosed embodiments provide a method and apparatus for structural bonding of relatively large composite structural members in a localized area that obviates the need for curing the bond in an autoclave. The ability to apply localized heat and pressure to the bond joint allows the use of a composite splice member and may eliminate the need for fasteners.

According to an aspect, there is provided an apparatus for joining elongate composite sections of a composite structural member according to claim 1. According to another aspect, there is provided a method of joining two elongate composite sections according to claim 8.

According to one disclosed example, a composite structural member comprises a first composite section and a second composite section. A composite splice member at least partially overlaps and splices together the first and second sections. The splice member forms a joint between the first and second composite sections having a V-shaped cross section. The composite sections may have complex geometries, including but not limited to a C shape, Z shape, J shape, T shape, an I shape and a hat shape cross section.

According to a disclosed method example, producing a composite structural member comprises forming a first and a second composite section. A composite splice member is formed and to form a splice joint between the first and second composite sections. The splice member is bonded to the first and second composite sections. Bonding the splice member may include using a press to locally apply heat and pressure to the joint. The bonding may be performed using an inflatable pressure bladder to apply pressure to the joint within a press while heat is being applied to the joint.

According to another example, apparatus for curing composite parts comprises a first platform and a second platform relatively moveable between an open, part loading position and a closed, part curing position; a tool against which a part may be pressed. The tool is supported by the first platform. At least a first bladder adapted to be pressurized and supported by the second platform for pressing the part against the tool. Means are provided for heating the tool. The first and second platforms may be independently portable.

According to a further disclosed example, apparatus is provided for joining composite sections of a composite structural member. The apparatus includes a bonding machine for bonding a composite splice member onto a joint between adjacent ends of two elongated, composite sections and, jigs on opposite sides of the bonding machine for supporting the composite sections in end-to-end relationship.

According to a further method example, joining two elongated composite sections comprises: supporting the composite sections in aligned, end-to-end relationship. Adjoining ends of the composite sections are placed within a press. A joint is formed between the composite sections by placing an uncured splice member over the adjoining ends of the composite sections. The press is closed and the splice member is bonded to the ends of the composite sections by using the press to apply heat and pressure to the joint.

According to another example, a heated tool assembly for forming a part comprises a first tool and a second tool between which a part may be formed. Means are provided for heating the first tool, including a heater for heating a medium, a blower for blowing the heated medium, a plurality of nozzles for directing the heated medium over the first tool, and a plenum coupled between the blower and the nozzles.

In a first example of this invention, there is provided a composite structural member, comprising:
a first composite section;
a second composite section; and,
a composite splice member at least partially overlapping and splicing together the first and second composite sections.

Optionally, the first and second composite sections each have a cross section selected from the group consisting of:
a C shape,
a Z shape,
a J shape,
a T shape
an I shape, and
a hat shape.

Optionally, the splice member includes a substantially V-shaped longitudinal section extending traverse to the cross section of the splice member.

Optionally, the first and second composite sections extend in differing directions forming an angle, and
the composite splice member includes first and second portions respectively overlapping and joined to the first and second composite sections.

Optionally, the composite splice member forms a substantially V-shaped joint between the first and second composite sections.

Optionally, the substantially V-shape joint includes:
a first scarf joint between the composite splice member and the first composite section, and
a second scarf joint between the composite splice member and the second composite section.

Optionally, the first and second composite sections form one of a continuous spar, a continuous beam, a continuous stringer, or a continuous frame for an aircraft, and
the splice member is bonded to the first and second composite sections.

In a second example of this invention, there is provided an aircraft comprising an airframe including the composite structural member of the first example.

In a third example of this invention, there is provided a method of manufacturing the airframe the second example, the method comprising assembling the composite structural member into a wing assembly, the wing assembly forming a component of the airframe.

In a fourth example of this invention, there is provided a method of manufacturing the aircraft of the second example, comprising assembling the aircraft with at least one composite structural member according to the first example.

Optionally, the first and second composite sections form a continuous part selected from the group consisting of -
a spar,
a beam,
a stringer, and
a frame.

Optionally, the continuous part has a cross section selected from the group consisting of:
a C shape,
a Z shape,
a J shape,
a T shape,
an I shape, and
a hat shape.

In a fifth example of the invention, there is provided a method of producing a composite structural member, comprising:
forming a first composite section;
forming a second composite section;
forming a composite splice member; and,
bonding the composite splice member to the first and second composite sections to form a splice joint between the first and second composite sections.

Optionally, forming the first composite section includes forming a first layup of composite materials and curing the first layup,
forming the second composite section includes forming a second layup of composite materials and curing the second layup,
forming the composite splice member includes forming a third layup of composite materials, and
bonding the splice member includes placing the third layup on the first and second composite sections and then curing the third layup.

Optionally, bonding the splice member includes using a press to locally apply heat and pressure to the joint.

Optionally, forming the first layup includes forming a first ramp along an edge of the first layup,
forming the second layup includes forming a first second ramp along an edge of the second layup, and
forming the third layup includes forming third and fourth ramps respectively overlapping the first and second ramps when the third layup has been placed on the first and second composite sections.

Optionally, bonding the splice member includes:
providing a mandrel,
placing the joint over the mandrel,
placing a vacuum bag over the joint, and
using the bag to apply pressure to the joint.

Optionally, bonding the splice member includes:
using a pressurized bladder to apply pressure to the joint, and
applying heat to the joint while pressure is being applied to the joint by the bladder.

Optionally, using the bladder to apply pressure is performed within a press.

In a sixth example of the invention, there is provided a composite structural member made by the method of the fifth example.

Optionally, each of the first and second composite sections has a cross section selected from the group consisting of:
a C shape,
a Z shape,
a J shape,
a T shape,
an I shape, and
a hat shape.

Optionally, the composite structural member is one selected from the group consisting of -
a spar,
a beam,
a stringer, and
a frame.

In a seventh example of the invention, there is provided apparatus for curing composite parts, comprising:
a first platform and a second platform relatively movable between an open position and a closed position;
a tool against which a part may be pressed, the tool being supported by the first platform;
at least a first bladder adapted to be pressurized and supported by the second platform for pressing the part against the tool; and,
means for heating the tool.

Optionally, each of the first and second platforms is portable.

Optionally, the apparatus further comprises:
first means for mounting the tool on the first platform for linear movement substantially horizontally toward and away from the part; and,
second means for mounting the first bladder on the second platform for liner movement toward and away from the part.

Optionally, the apparatus further comprises:
a frame removably mounted on the second platform, and
wherein the first bladder is attached to the frame and removable from the second platform along with the frame.

Optionally, the heating means includes:
a first heating system mounted on the first platform for heating the tool, and
a second heating system mounted on the second platform for heating the part.

Optionally, the first heating system includes:
a heat source,
a blower,
ducting coupled with the blower and the heat source for carrying a heated medium, and
nozzles coupled with the ducting for directing the heated medium onto the tool.

Optionally, the means for heating the tool includes insulation surrounding the bladder.

Optionally, the ducting includes a return medium duct for carrying heated medium away from the tool, and the first heating system further includes -
a source of cool medium, and
a valve coupled with the return medium duct and with the source of cool medium for selectively delivering cool medium to the tool to cool the part.

Optionally, the medium is one of:
air, and
oil.

In an eighth example of this invention, there is provided apparatus for splicing elongate composite sections of a composite structural member, comprising:
a bonding machine for bonding a composite splice member onto a joint between adjacent ends of two composite sections; and
jigs on opposite sides of the bonding machine for supporting the composite sections in end-to-end relationship.

Optionally, the bonding machine includes a mandrel and alignment pins connecting the mandrel with the composite sections for maintaining the ends of the composite sections in a desired alignment within the bonding machine.

Optionally, the jigs are arranged to support the composite sections along their lengths and maintain the composite sections in a desired alignment as the splice member is bonded onto the joint between the composite sections.

Optionally, the bonding machine includes:
means for applying heat to the joint for curing the splice member, and
means for holding the composite sections against movement during curing.

Optionally, the means for holding the composite sections includes a pair of plates spanning the joint and clamping the adjacent ends of the composite sections together.

In a ninth example of the invention, there is provided a method of joining two elongate composite sections, comprising:
supporting the composite sections in aligned, end-to-end relationship;
placing adjoining ends of the composite sections within a press;
forming a joint between the composite sections by placing an uncured splice member over the adjoining ends of the composite sections;
closing the press; and,
bonding the splice member to the ends of the composite sections by using the press to locally apply heat and pressure to the joint.

Optionally, supporting the composite sections includes:
positioning jigs on opposite sides of the press, and
   holding the composite sections in the jigs as the splice member is being bonded to the ends of the composite sections.

Optionally, bonding the splice member includes:
placing a vacuum bag over the splice member, and applying pressure to the splice member by evacuating the vacuum bag.

Optionally, bonding the splice member includes:
positioning a pressure bladder in the press over the splice member and the vacuum bag, and applying pressure to the splice member by pressurizing the bladder.

Optionally, forming a joint includes placing the splice member and the ends of the composite sections on a mandrel, and applying heat to the joint includes directing a hot medium onto the mandrel.

Optionally, applying heat to the joint includes:
recirculating the medium directed over the mandrel, and heating the medium as it is re-circulated.

Optionally, the composite sections form one of:
a floor beam,
a spar,
a frame, and
a stringer.

In a tenth example of this invention, there is provided a heated tool assembly for forming a part, comprising:
a first tool and a second tool between which a part may be formed; and,
means for heating the first tool, including -
   a heater for heating a medium,
   a blower for blowing the heated medium,
   a plurality of nozzles for directing the heated medium over the first tool,
   a plenum coupled between the blower and the nozzles.

Optionally, the plenum includes a manifold having a medium inlet and a plurality of medium outlets spatially arranged to direct medium to differing zones on the first tool.

Optionally, each of the nozzles includes a perforated element through which heated medium may flow onto the first tool.

Optionally, the first tool is a mandrel having a substantially hollow side, and
the nozzles extend into the hollow side of the mandrel.

Optionally, the second tool includes:
a tool surface for forming the part and,
thermal insulation for reducing the escape of heat through the tool surface.

In an eleventh example of this invention, there is provided a method of joining composite sections to produce a continuous wing spar, comprising:
forming a first cured composite spar section;
forming a second cured composite spar section;
holding the first and second spar sections in aligned, end-to-end relationship;
placing an uncured composite splice member over a joint between the ends of the aligned spar sections;
placing the ends of the aligned spar sections and the splice member in a press;
applying a vacuum bag over the splice member;
closing the press;
applying a vacuum to the vacuum bag;
applying pressure to the splice member using a pressure bladder to force the splice member against a tool;
heating the tool and the splice member to cure the splice member;
opening the press after the splice member has been cured; and,
removing the continuous wing spar from the press.

In a twelfth example of this invention, there is provided a method of joining composite sections to produce a continuous composite stringer, comprising:
forming a first cured composite stringer section; forming a second cured composite stringer section;
holding the first and second stringer sections in aligned, end-to-end relationship;
placing an uncured composite splice member over a joint between the ends of the aligned stringer sections;
placing the ends of the aligned stringer sections and the splice member in a press;
applying a vacuum bag over the splice member;
closing the press;
applying a vacuum to the vacuum bag;
applying pressure to the splice member using a pressure bladder to force the splice member against a tool;
heating the tool and the splice member to cure the splice member;
opening the press after the splice member has been cured; and,
removing the continuous composite stringer from the press.

In a thirteenth example of this invention, there is provided apparatus for splicing composite frame sections to form a continuous composite frame, comprising:
a tool tower;
a tool;
means for removably mounting the tool on the tool tower;
a modular heating and cooling system on the tool tower for heating and cooling the tool;
a pressure tower;
a pressure bladder on the pressure tower;
means for pressurizing the pressure bladder to apply pressure to a splice joint between the ends of the frame sections;
means for mounting the tool tower and the pressure tower for movement toward and away from each other;
a locking system for locking the tool tower and the pressure tower together during a splicing operation; and,
jigs for supporting the frame sections in aligned, end-to-end relationship and for holding the splice joint between the tool and the pressure bladder.

The disclosed embodiments satisfy the need for a method and apparatus for forming a structural bond between two composite sections which eliminates the need for metal splice plates and does not require the bonded joint to be cured within an autoclave.

### BRIEF DESCRIPTION OF THE ILLUSTRATIONS

FIG. 1 is a broad block diagram of apparatus for joining composite sections to form a continuous structural member.
FIG. 2 is an elevational view of the splice joint between two composite sections shown in FIG. 1.
FIG. 3 is a sectional view taken along the line 3-3 in FIG. 2.
FIG. 4 is a sectional view taken along the line 4-4 in FIG. 2.
FIGS. 5-9 are cross sectional views illustrating the shapes of other types of structural members.
FIG. 10 is a sectional view in the area designated as "B" in FIG. 3.

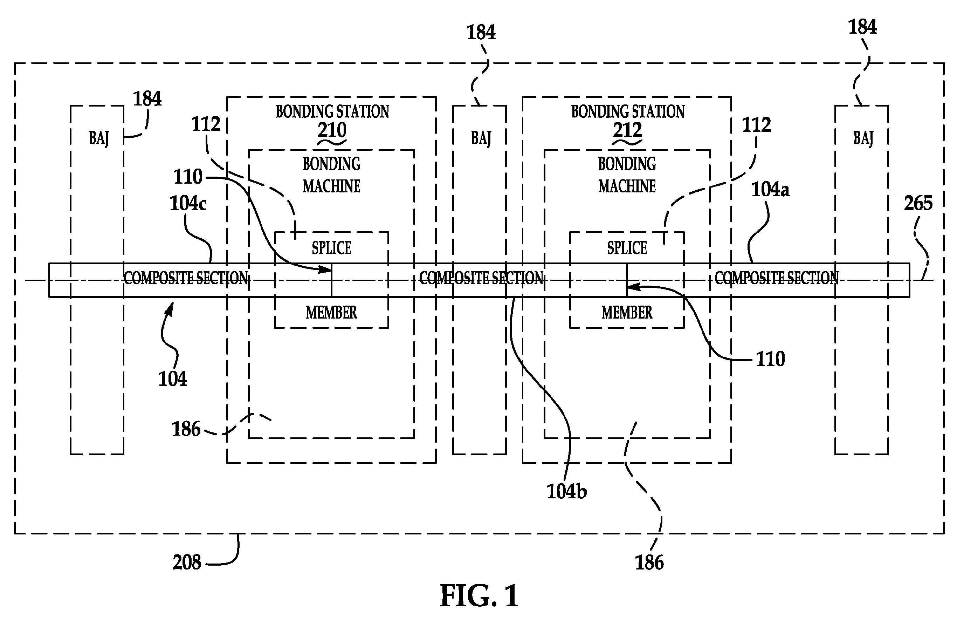

FIG. 1 is a simplified flow diagram illustrating a method for structural bonding of composite sections.

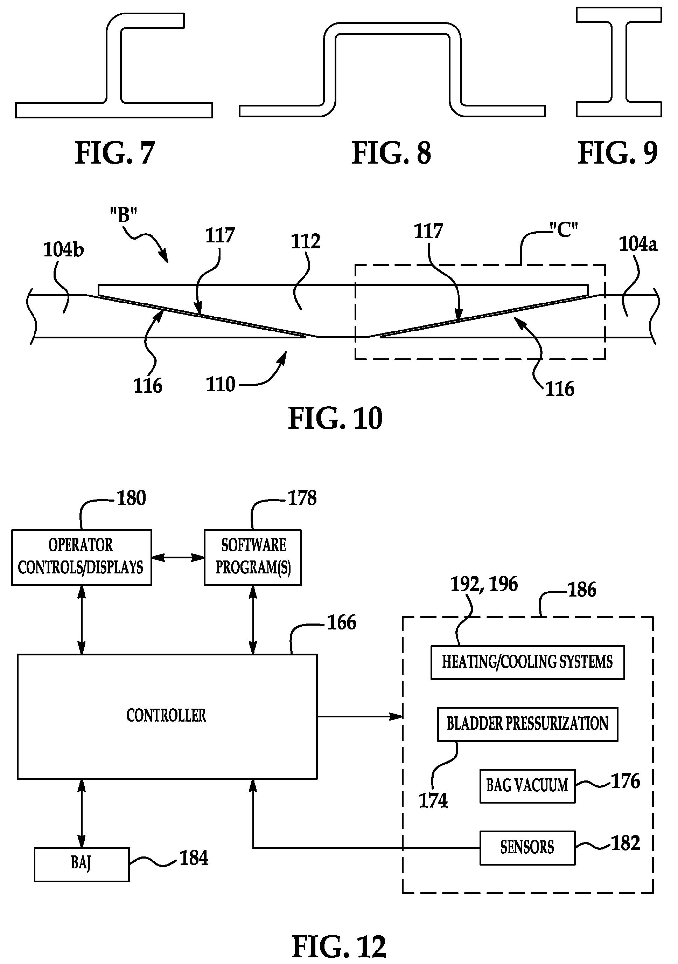

FIG. 12 is a block diagram illustrating a control system used in apparatus for structural bonding of composite sections.

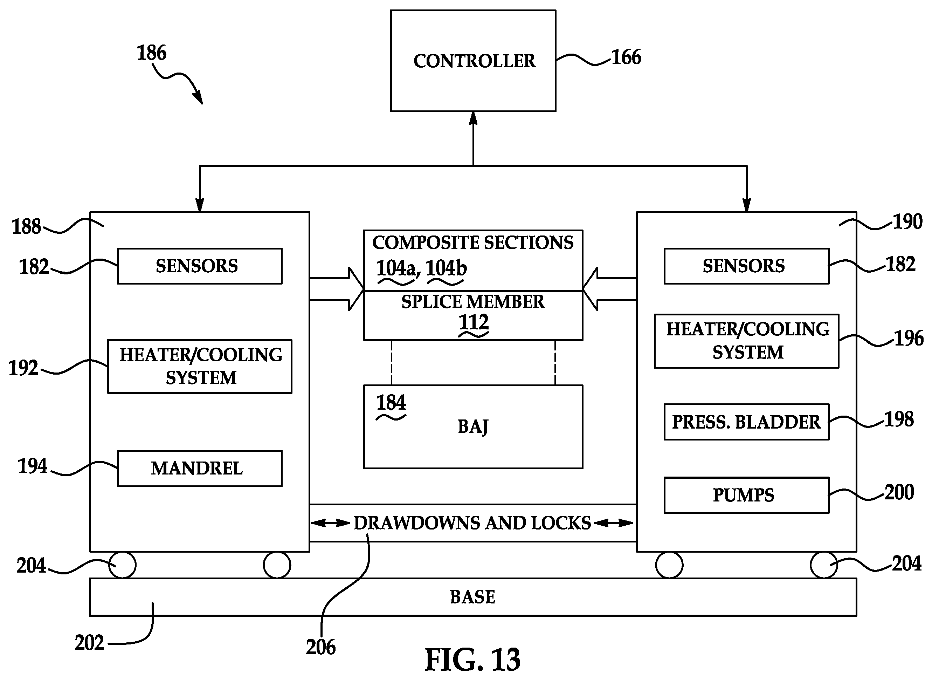

FIG. 13 is a functional block diagram of apparatus for structural bonding of composite sections.

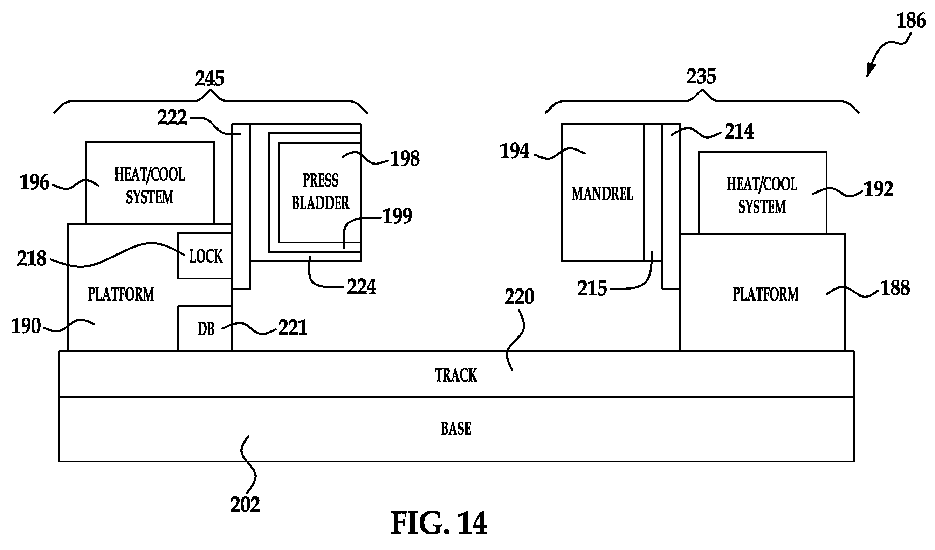

FIG. 14 is a block diagram of a bonding machine in an open position.

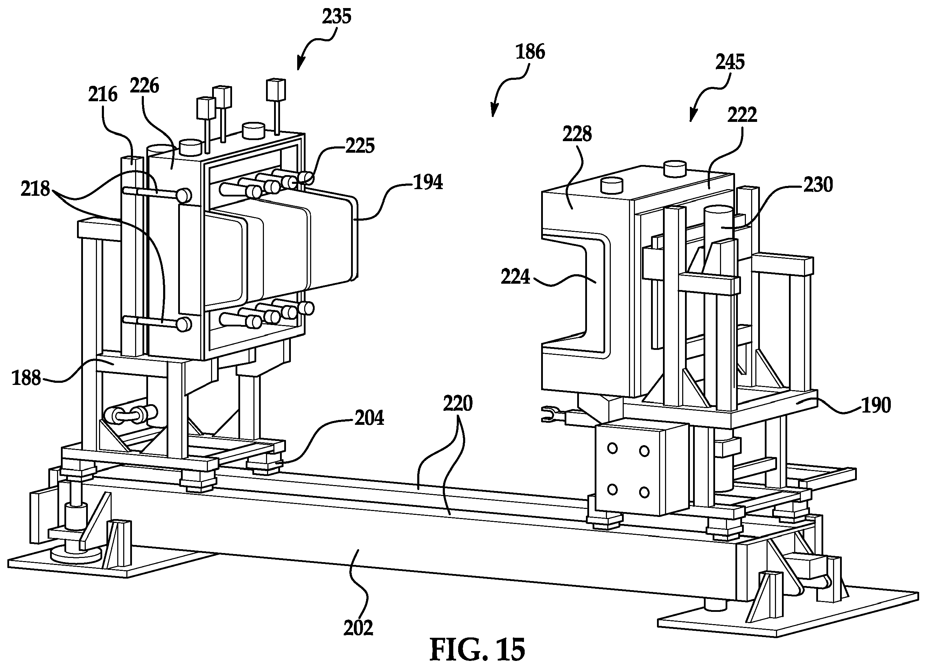

FIG. 15 is a perspective view of the bonding machines shown in FIG. 14.

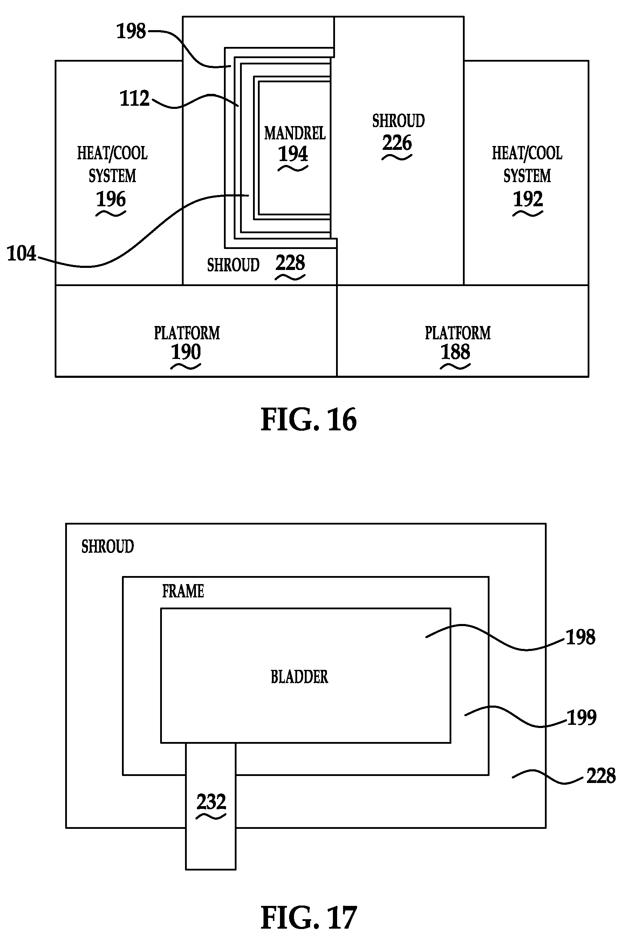

FIG. 16 is another block diagram of the bonding machine, shown in a closed position.
FIG. 17 is a block diagram of a pressure bladder.

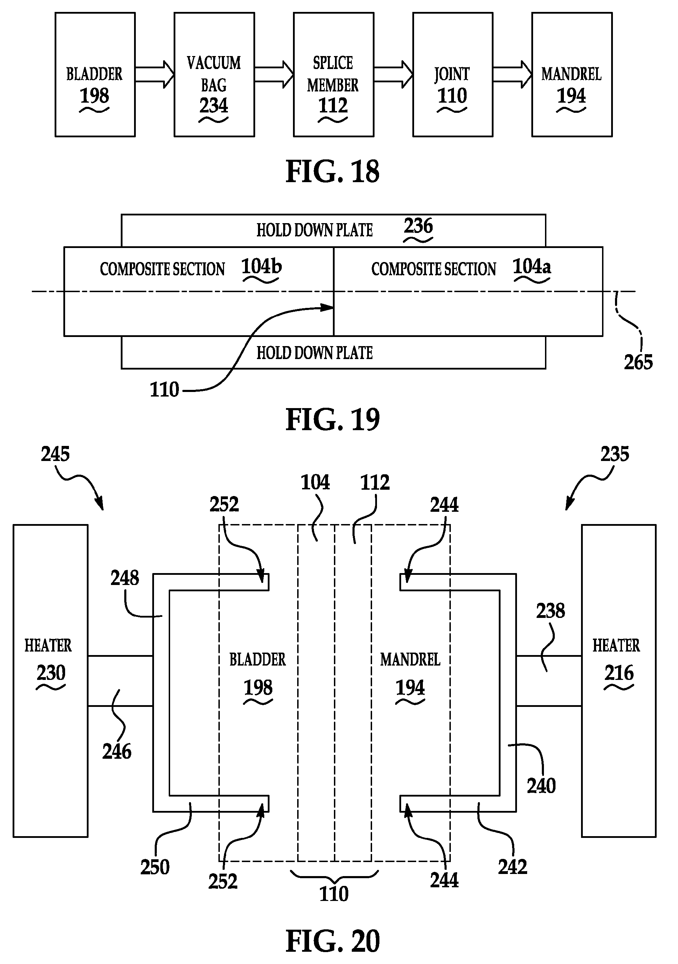

FIG. 18 is a block diagram illustrating the installation of a vacuum bag and a splice member on the bonding machine.
FIG. 19 is a block diagram showing a pair of hold down plates used to hold the composite sections during the curing process.
FIG. 20 is a block and diagrammatic view illustrating heating systems used to heat the mandrel and bladder.

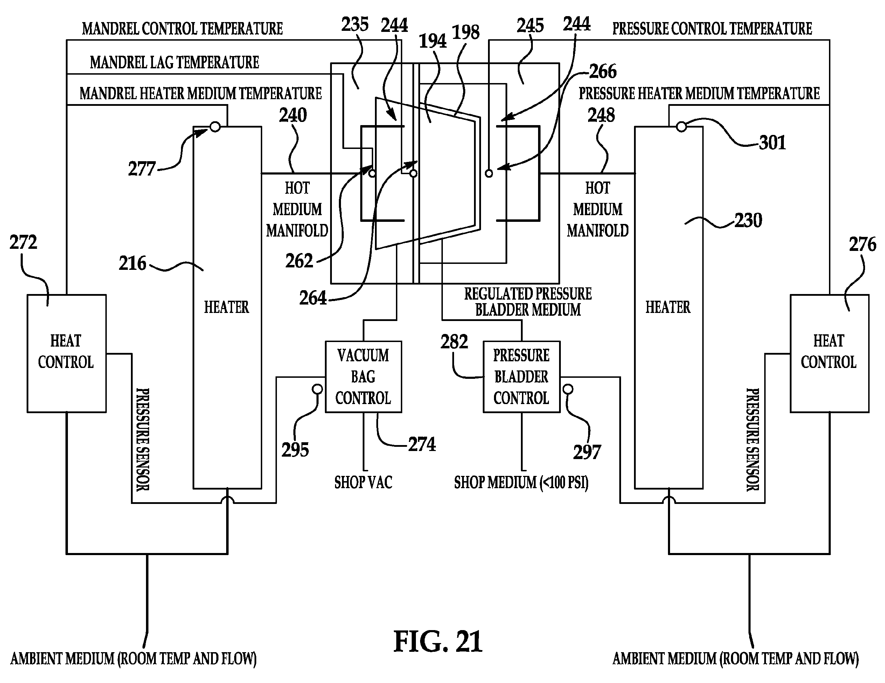

FIG. 21 is a block diagram illustrating components of control systems forming part of the bonding machine.

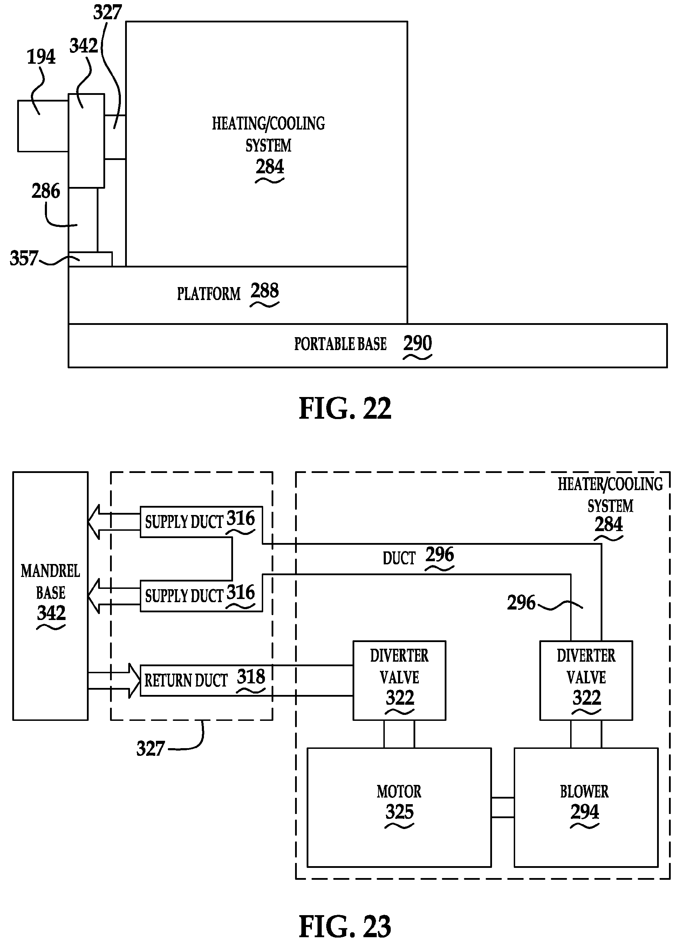

FIG. 22 is a diagrammatic illustration of an alternate form of the tool tower, and showing a modular heating/cooling system.
FIG. 23 is a block diagram illustrating additional components of the modular heating and cooling system shown in FIG. 22.

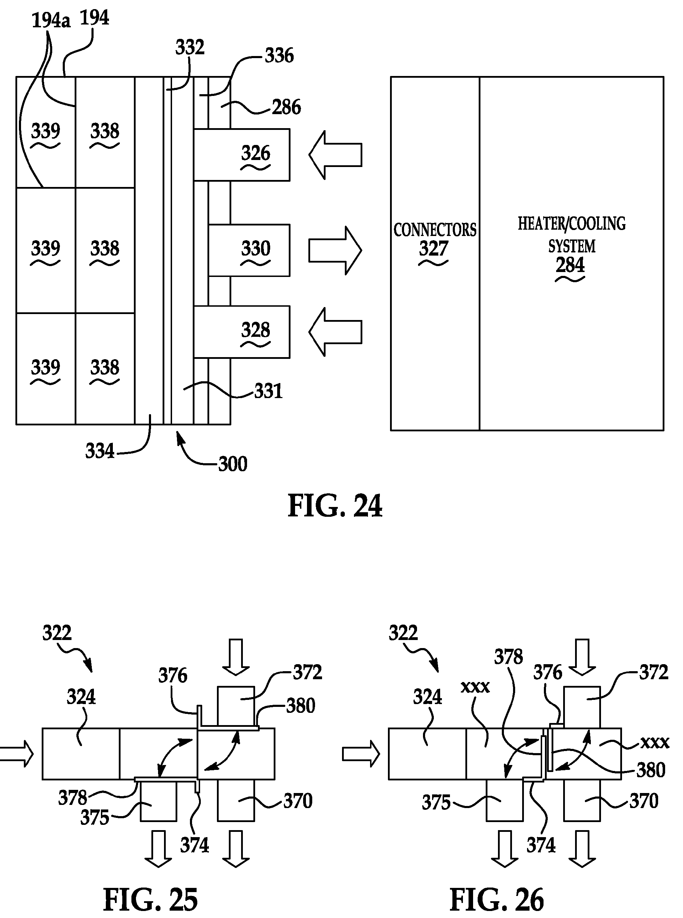

FIG. 24 is a block diagram illustrating connections between a mandrel assembly and the modular heating and cooling system.
FIG. 25 is a block diagram of a diverter valve forming part of the modular heating and cooling system, wherein the valve has been switched to a heating mode.
FIG. 26 is a block diagram similar to FIG. 25, but showing the valve having been switched to a cooling mode.

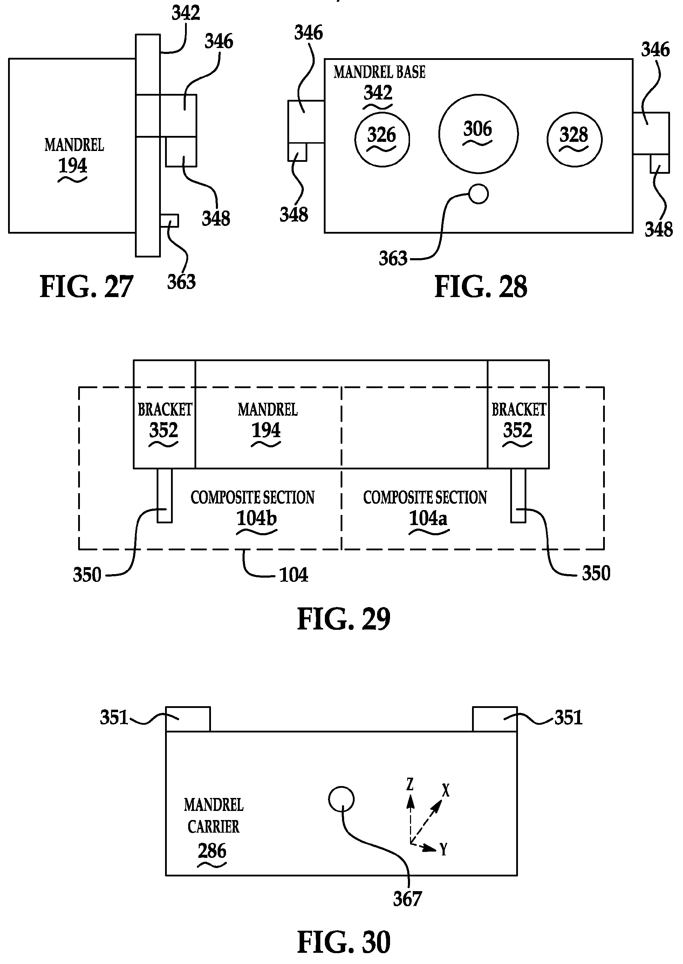

FIG. 27 is a block diagram illustrating components of the mandrel assembly.
FIG. 28 is another block diagram illustrating additional components of the mandrel assembly.
FIG. 29 is a block diagram illustrating details of the mandrel useful in indexing the spar sections.
FIG. 30 is a block diagram of the mandrel carrier.

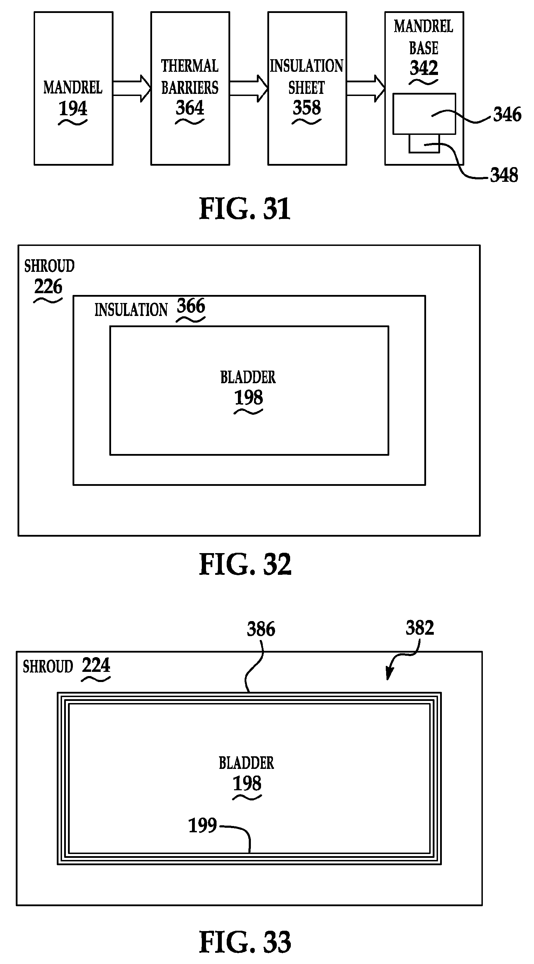

FIG. 31 is a block diagram illustrating the relationship between components of the mandrel assembly and mandrel base.
FIG. 32 is a block diagram of a bladder and shroud assembly.
FIG. 33 is a block diagram showing a removable bladder and frame.

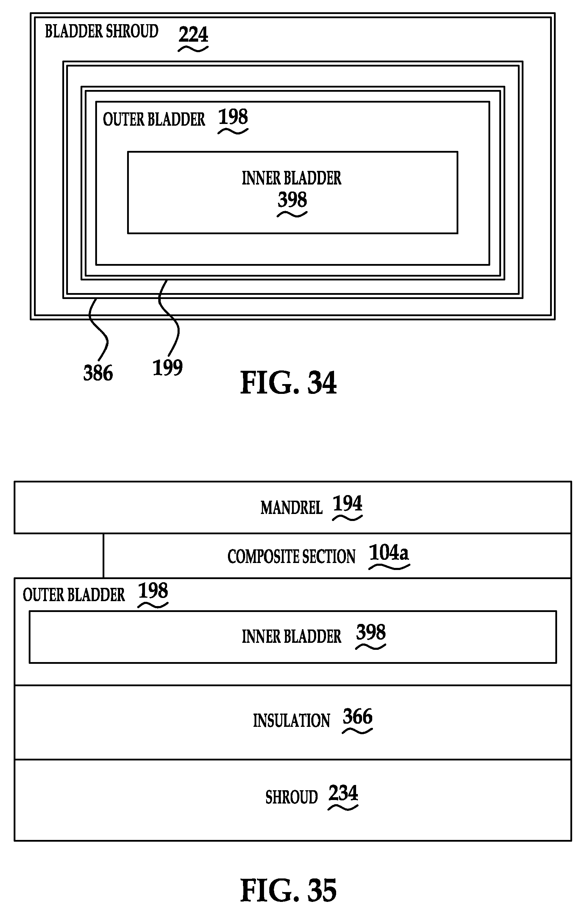

FIG. 34 is a block diagram of a dual pressure bladder.
FIG. 35 is a block diagram illustrating the pressure bladder for applying pressure to composite sections.

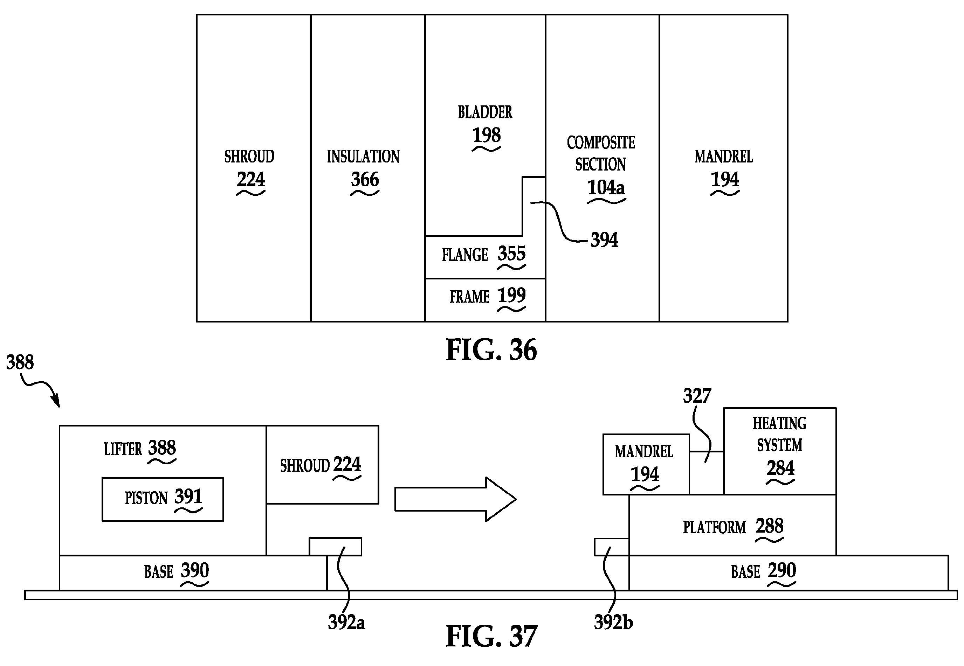

FIG. 36 is a block diagram illustrating an alternate form of a frame useful in holding composite sections in place during cure.
FIG. 37 is a block diagram illustrating a portable pressure shroud cart in relation to the tool platform.

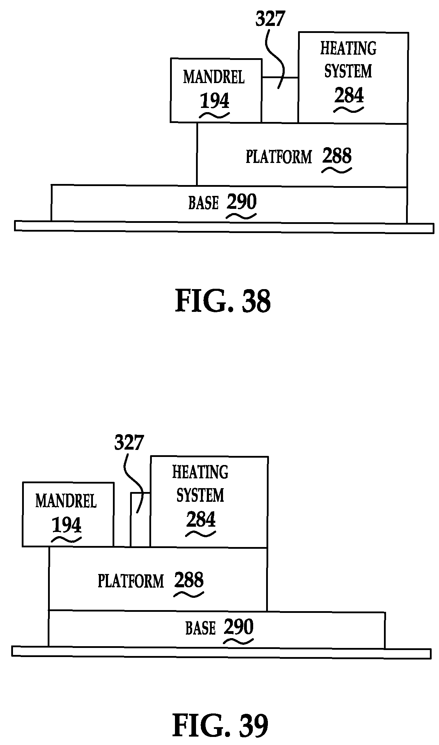

FIG. 38 is a block diagram illustrating the tool platform in a retracted position.
FIG. 39 is a view similar to FIG. 38 but showing the tool platform having been moved to a forward position and the mandrel assembly having been disconnected from the heating/cooling system in preparation for removal of the mandrel carrier.

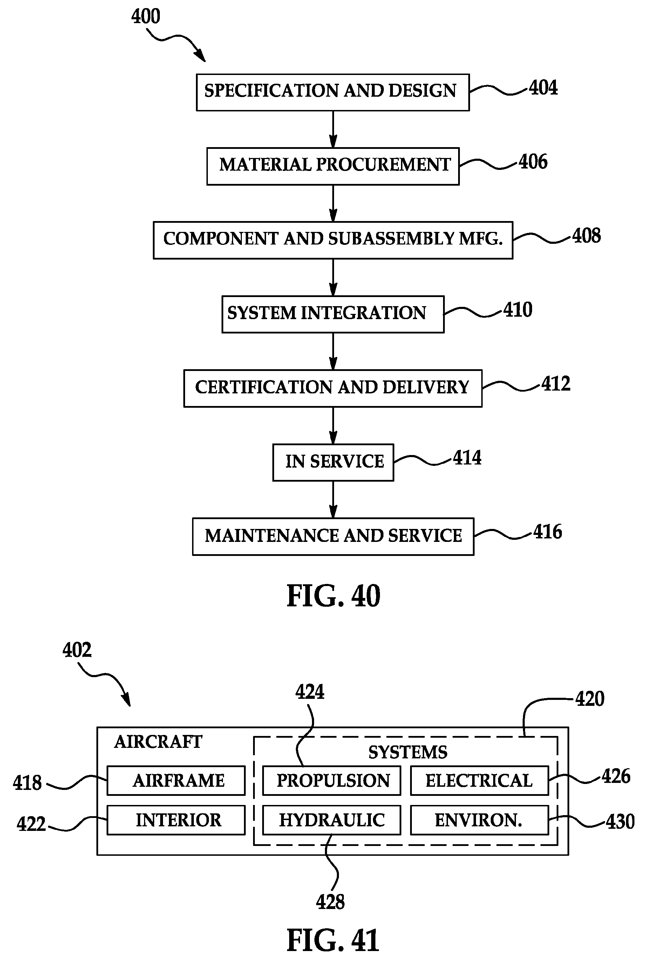

FIG. 40 is a flow diagram of aircraft production and service methodology.
FIG. 41 is a block diagram of an aircraft.

### DETAILED DESCRIPTION

FIG. 1 illustrates a typical production cell 208 that may be used to join elongate composite sections, such as composite sections 104a, 104b, 104c, to form a continuous structural member 104, such as without limitation, a stringer, a spar, or a frame. At least a first composite section 104(a) and a second composite section 104(b) are joined in end-to-end relationship using a structural bond that form a splice joint 110. The composite sections 104-104c may be supported by a plurality of aligned bond assembly jigs 184. The bond assembly jigs 184 support the composite sections 104a-104c in aligned relationship while allowing the latter to be pulled along their longitudinal axes 265 into bonding machines 186 respectively located at bonding stations 210, 212. The bonding stations 210, 212 are located along the length of the structural member 104 where the splice joints 110 are to be bonded.

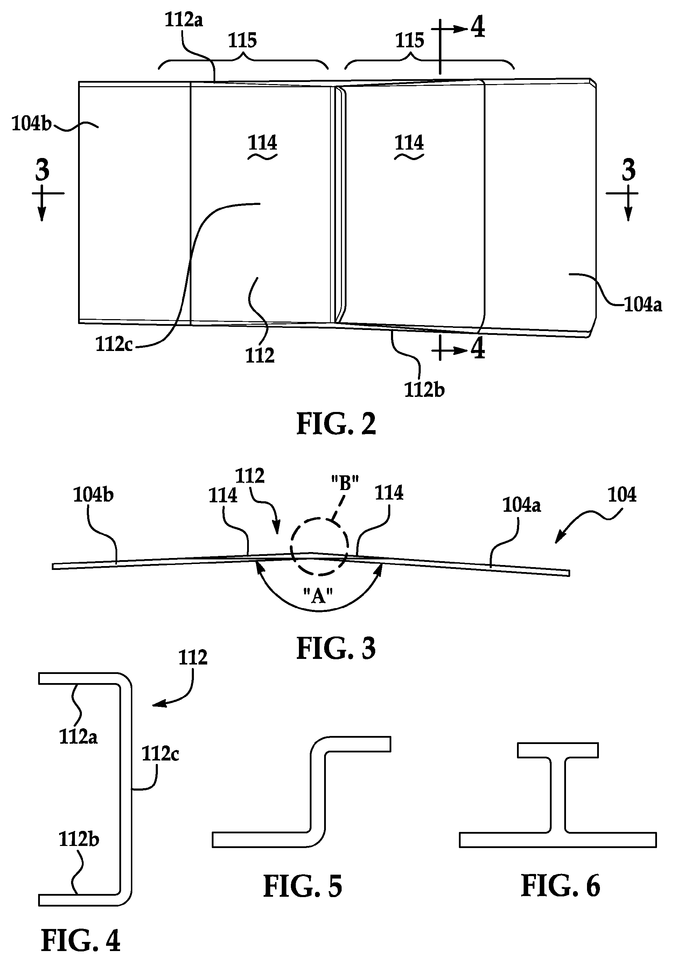

Referring to FIGS. 2-4, in accordance with the disclosed examples, the structural member 104 may be formed by joining a number of composite sections such as composite sections 104a, 104b and 104c, in end-to-end relationship using splice joints 110. FIG. 3 illustrates a top view of one specific structural member 104, in which first and second composite sections 104a, 104b respectively, are joined together at a splice joint 110 forming a "kink" or angle designated as "A". Each of the composite sections 104a-104c may comprise a cured composite laminate having any of various cross sectional geometries, however as will be described below, the composite sections 104a-104c chosen to illustrate the examples have a C-shape cross section as shown in FIG. 4.

It should be noted here that while a particular structural member 104 has been illustrated in the Figures, the disclosed examples may be employed to form any of a wide variety of elongate, structural members by bonding composite sections together using composite splice joints 110. For example, and without limitation, the disclosed examples may be used to splice composite sections, especially elongate sections to form composite floor beams, frames, stringers, to name only a few. Moreover, the structural members may have any of a wide variety of cross sectional shapes, including, without limitation, a Z-shape shown in FIG, 5, a T shape shown in FIG. 6, a J shape shown in FIG. 7, a hat shape shown in FIG. 8 or an I shape shown in FIG. 9.

Referring now to FIGS. 2 and 3, first and second adjacent composite sections 104a, 104b may be bonded together using a composite splice member 112 which, as best shown in FIG. 4, has a generally C-shape cross section corresponding to that of the composite sections 104a, 104b. The splice member 112 includes top and bottom flanges 112a, 112b connected by a web 112c. Although the splice member is shown as being of a one-piece construction in the illustrated example, the splice member 112 may comprise two or more sections or pieces in some applications. Since the composite sections 104a, 104b form a slight angle "A" (FIG. 3), the splice member 112 includes two adjacent sections 114 as shown in FIG. 2 which form an angle that is substantially equal to the angle "A". As best seen in FIG. 9, the splice member 112 forms an overlapping, scarf type joint 110 with the adjoining composite sections 104a, 104b. It should be noted here however, that while a scarf joint has been illustrated, other types of joints may be employed to form the splice joint 112, including but not limited to lap joints, step lap joints, tabled splice joints, etc.

Referring now to FIG. 10, the composite sections 104a, 104b each may comprise multiple laminated plies (not shown) of a fiber reinforced polymer resin, such as carbon fiber epoxy, in which the outer edges 117 include ply drop-offs (not shown) forming tapered or ramp geometry. Similarly, the splice member 112 may be formed from multiple plies (not shown) of a fiber reinforced polymer resin which may be respectively aligned with the plies of the composite section 104a, 104b. The splice member 112 has a substantially V-shape cross section defining inclined or ramped surfaces 116 which overlap and are bonded to corresponding tapered edges 117 on the outer, adjoining ends of the composite sections 104a, 104b to form the splice joint 110. As previously noted, although a splice joint 110 has been illustrated, other splice configurations may be possible, depending on the application.

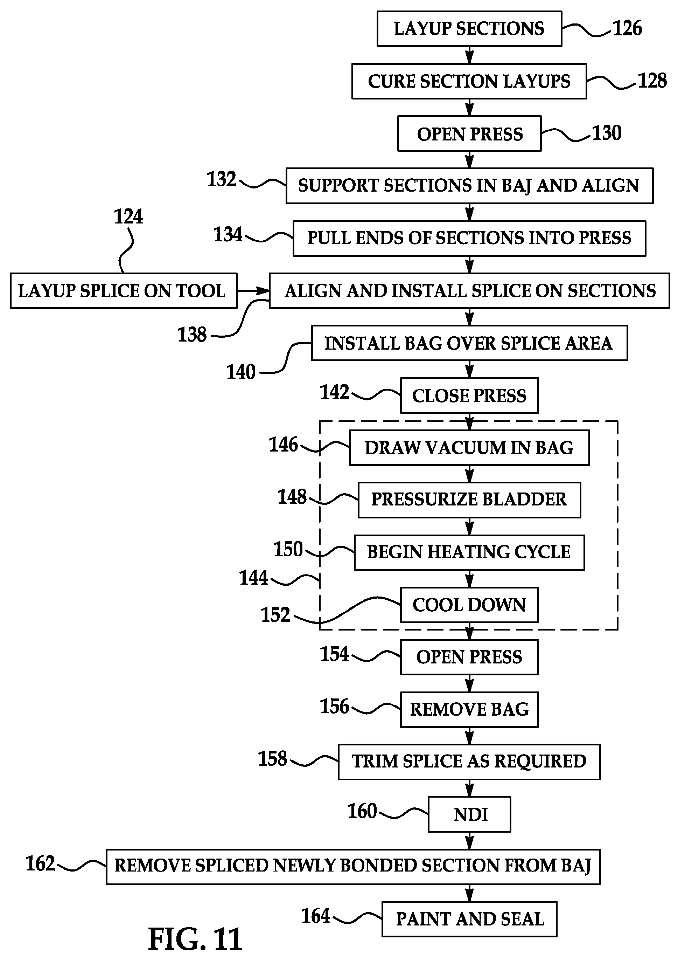

Attention is now directed to FIG. 11 which broadly illustrates the steps of a method for structural bonding of the composite sections 104a-104c. Beginning at step 126, the composite sections 104a-104c are laid up on a suitable tool (not shown) and are then individually cured at step 128, using heat and pressure, typically within an autoclave (not shown). Next, at 130, a bonding machine 186 (FIG. 1) is opened in preparation for receiving the ends of two adjacent composite sections, such as first and second composite sections 104a, 104b.

At 132, the first and second composite sections 104a, 104b are loaded into bond assembly jigs 184 (BAJ) (see FIG. 1) and aligned with each other. Next, at 134, the ends of the composite sections 104a, 104b are pulled into the bonding machine 186. After the splice member 112 has been laid up and formed over a tool (not shown) at step 124, the splice member 112 is aligned and installed on the composite sections 104a, 104b at the splice joint 110, as shown at step 138.

At 140, a vacuum bag is installed over the splice area which includes the splice member 112, following which, at 142, the bonding machine 186 may be closed. The green (uncured) splice member 112 is then bonded to the ends of the composite sections 104a, 104b by a series of steps shown at 144. Beginning at 146, a vacuum is drawn in the vacuum bag in order to partially consolidate the plies of the splice member 112 layup. Next, at 148, a bag-like pressure bladder (discussed later) is pressurized which presses the splice member 112 and composite sections 104a, 104b against a mandrel 194 (FIG. 13) thereby further consolidating the plies of the splice member 112 layup.

At this point, a heating cycle is commenced at 150 in which the composite sections 104a, 104b and the splice member 112 are locally heated in order to cure the green splice member 112 and thereby bond it to the composite sections 104a, 104b to form a splice joint 110. Finally, at 152, the splice member 112 is cooled, following which the bonding machine 186 may be opened at 154. At 156, the vacuum bag is removed following which the splice member 112 is trimmed, as may be required, as shown at step 158. The resulting bonded splice joint 110 may be nondestructively inspected (NDI) at step 160, following which the structural member 104 may be removed from the bond assembly jigs 184. Depending upon the application, the completed structural member 104 may be painted and sealed at step 164. It should be noted here that steps 158-164 may be carried out in any desired order.

In the method examples described above in connection with FIG. 11, the composite sections 104(a), 104(b) are cured before the uncured splice member 112 is applied to the splice joint 110. In other examples however, it is possible that only portions of the composite sections 104(a), 104(b) are cured before the uncured splice member 112 is applied to the splice joint 110. For example, as shown in FIG. 2, portions 115 of the composite sections 104(a), 104(b) spanning the splice member 112 may be in an uncured or partially cured ("staged") state at the time the splice member 212 is applied to the joint 110, while remaining areas of the composite sections 104(a), 104(b) are in a cured state. In this alternative example, the uncured portions 115 of the composite sections 104(a), 104(b) may be cocured with the uncured splice member 112.

FIG. 12 broadly illustrates components of a control system for the bonding machine 186. A controller 166, which may comprise a programmable logic controller (PLC) or a personal computer (PC), may use various software programs 178 to automatically carry out control functions in a preprogrammed manner. Operator controls and displays 180 allow operator access to the software programs 178 and form an interface with the controller 166 to allow adjustment of settings and display of process information. In some cases, controller 166 may be coupled with the bond assembly jigs 184 (FIG. 1) to sense or control the position of the long composite sections 104a, 104b relative to each other.

The controller 166 may control various components and systems on the bonding machine 186, including heating/cooling systems 192, 196, bladder pressurization 174 and a bag vacuum 176. The bonding machine 186 may include a variety of later discussed sensors 182 that provide signals to the controller 166, such as temperatures and pressures.

FIG. 13 is a functional block diagram of the bonding machine 186, which broadly comprises a first, tool platform 188 and a second, pressure platform 190. Platforms 188, 190 may be mounted for sliding or rolling movement by guides 204 on a common base 202 for linear horizontal movement toward and away from each other. As will be discussed below, the platforms 188, 190 may be moved from an open position shown in FIG. 13 to a closed position (FIGS. 16 and 21) in which heat and pressure are locally applied to the splice area comprising the splice member 112 and the ends of the assembled composite sections 104a, 104b while being supported by the bond assembly jigs 184. This locally applied heat and pressure structurally bond the splice member 112 to the composite sections 104a, 104b to create the bonded splice joint 110. The platforms 188, 190 may be drawn and locked into their closed position using draw downs and locks 206. The tool platform 188 may include sensors 182, a heating/cooling system 192 and a mandrel 194. Similarly, the pressure platform 190 may include sensors 182, a heating/cooling system 196, a pressure bladder 198 and pumps 200 used to draw a bag vacuum and pressurize the bladder 198.

Attention is now directed to FIGS. 13-15 which illustrate further details of the bonding machine 186. The bonding machine 186 broadly includes a tool tower 235 and a pressure tower 245 between which the assembled splice member 112 and composite sections 104a, 104b may be structurally bonded to form a bonded splice joint 110. The tool tower 235 includes a tool platform 188 mounted for linear horizontal movement on a base 202 by any suitable means. In the illustrated example, platform 188 includes feet 204 that are guided by tracks 220. A tool, which may comprise a mandrel 194, is mounted on a mandrel base 215 which in turn is secured to a platen plate 214. The platen plate 214 is supported on the tool platform 188. The mandrel base 215 is releasable from the platen plate 214 by means of a series of locking levers 225 to allow the mandrel 194 to be easily removed and/or replaced.

The pressure tower 245 includes a pressure platform 190 which also has feet 204 engaging the tracks 220. An inflatable pressure bladder 198 is held in a frame 199 that is secured to a shroud 224. The shroud 224 in turn, is secured to a platen plate 222 mounted on the pressure platform 190. Heating/cooling systems 192, 196 are respectively mounted on the traveling platforms 188, 190 for heating and cooling the mandrel 194, and the area surrounding the pressure bladder 198. Outer covers 226, 228 may be employed to protectively surround components on the tool and pressure towers 235, 245 respectively. An electric or other form of motor (not shown) may be used to power the platforms 188, 190 to travel along the track 220 between an open, part-loading/unloading position as shown in FIGS. 13 and 14, to a closed, part curing position as shown in FIG. 16. A draw bar 221 (FIG. 14) may be connected between the towers 235, 245 and employed to draw the platforms 188, 190 into a final closed position. Locking arms 218 may be used to lock the platforms 188, 190 together in their closed position.

Referring particularly to FIG. 17, the pressure bladder 198 may have a cross section that is substantially a C-shape, similar to the shape of the mandrel 194. The bladder 198 may be formed of any suitable material capable of withstanding temperatures and pressures for the particular application, including for example and without limitation, silicone rubber. A fluid fitting 232 allows pressurized fluid, which may be a gas or a liquid to enter and exit the bladder 198.

Attention is now directed to FIGS. 17 which illustrate steps for readying and closing the bonding machine 186 in preparation for a bonding operation. The splice member 112 is first applied over the joint 110 between the composite sections 104a, 104b which are held in an engineering defined space by the previously discussed bond assembly jigs 184. Next, with the bonding machine 186 still open, a vacuum bag 234 may be applied over the splice member 112. Both the splice member 112 and the vacuum bag 234 extend the full thickness of the composite sections 104a, 104b which may include ply build-ups (not shown) on each side of the joint 110. With the splice member 112 and vacuum bag 234 having been installed, the bonding machine 186 is closed by moving the platforms 188, 190 toward each other. As previously mentioned, a draw bar 221 (FIG. 14) may be employed if necessary to pull the platforms 188, 190 together until locking arms 218 (FIG. 15) can be rotated to lock the position of the mandrel 194 relative to the pressure bladder shroud 224.

Referring now to FIG. 19, during the curing process in which the composite sections 104a, 104b are locally heated, the composite sections 104a, 104b may experience movement along their longitudinal axes 265. In order to achieve final assembly requirements, this movement may be substantially reduced by holding the composite sections 104a, 104b using a pair of hold down plates 236 which span the splice joint 110 and clamp the adjacent ends of the composite sections 104a, 104b together. The hold down plates 236 may be fixed to abrasive, excess edge sections (not shown) on the top and bottom of the composite sections 104a, 104b overlying the splice joint 110 and rigidly connecting the composite sections 104a, 104b.

Attention is now directed to FIG. 20 which illustrates further details of the heating/cooling systems 192, 196 (FIG. 14) that are used to heat the area of the splice joint 110 to a temperature sufficient to result in the curing of the slice member 112, and then cool the splice member 112 after curing. On the side of the tool tower 235, a heating element 216 heats a medium that is delivered through a supply duct 238 to a manifold 240 which routes the heated medium to distribution ducts 242. The distribution ducts 242 supply the heated medium to nozzles 244 which direct heated medium onto the inside surface of the mandrel 194 which is hollow on one side thereof. As used herein, "medium" and "heated medium" are intended to include a variety of flowable mediums, including without limitation, air and other gases, as well as fluids, including oil. Other forms of heating such as without limitation, induction heating may also be possible.

On the side of the pressure tower 245, the heating element 230 heats a medium that is delivered through a supply duct 246 to a manifold 248 which routes the hot medium to distribution ducts 250. The distribution ducts 250 deliver the hot medium to nozzles 252 which direct the medium to the area surrounding the pressure the bladder 198 and the outside mold line (OML) of the splice member 112.

FIG. 21 illustrates additional components of the heating/cooling systems 192, 196 as well as other systems such as a vacuum bag control 274 and bladder pressure control 282. An ambient medium is drawn through the heating element 216 and distributed by the manifold 240 to the nozzles 244 in order to heat the mandrel 194. The heating element 216 is controlled by a heat control 272, based in part on data received from a vacuum bag pressure sensor 295, a mandrel heater medium temperature sensor 277, a mandrel lag temperature sensor 262 and a mandrel control temperature 264. Vacuum within the vacuum bag 234 (FIG. 18) is controlled by a vacuum bag control 274.

On the side of the pressure tower 245, an ambient medium is drawn through the heat element 230 to the hot medium manifold 248 which distributes the hot medium to the nozzles 244. Pressure applied to the pressure bladder 198 is controlled by a pressure control 282 which includes a pressure sensor 297 that provides pressure data to the heat control 276. The medium flowing through the heater 230 may further be controlled by the control 276 based on data generated by a pressure control temperature sensor 266 and a pressure heater temperature sensor 301.

Attention is now directed to FIG. 22 which illustrates an alternate example of the tool tower 235. In this example, a self-contained, modular heating/cooling system 284 is supported by rails (not shown) on a traveling platform 288. The platform 288 is linearly displaceable on a portable base 290. The mandrel 194 is secured to a mandrel base 342 which is removably supported on a mandrel carrier 286. The mandrel carrier 286 is removably mounted on supports 357 positioned on the top of the platform 288. Thus, the mandrel carrier 286 may be easily removed from the platform 288, and the mandrel 194 along with the mandrel base 342 may be removed from the mandrel carrier 286. The heating/cooling system 284 includes later discussed medium supply and return ducts (not shown in FIG. 22) that are releasably coupled with the mandrel 194 by releasable connections 327.

Additional details of the heating/cooling system 284 are shown in FIGS. 22-25. Blower drive motor 325 drives a blower 294 which moves the medium through a heating element 216, and then through a duct 296 to a pair of hot medium supply ducts 314, 316. The hot medium supply ducts 314, 316 are respectively coupled with inlet connections 326, 328 (FIG. 25) passing through the back of the mandrel base 342. The hot medium supplied through inlet connections 326, 328 may be delivered to a nozzle plenum assembly 300 (FIG. 24) that will be discussed later in more detail below. Medium returning from the nozzle plenum assembly 300 passes through a return medium inlet connection 330 and is delivered via a return duct 318 to a diverter valve 322.

FIG. 24 illustrates further details of the nozzle plenum assembly 300. The nozzle plenum assembly 300 is secured to the back of the mandrel 194. A plenum frame 334 to which box-shaped, perforated nozzles 338 are attached. The perforated nozzles 338 extend into compartments or zones 339 in the mandrel 194 that are defined by partial partition walls 194a. Each of the nozzles 338 is secured with fasteners (not shown) to the plenum frame 334. Medium inlet connections 326, 328 are secured to a plate 331 which is fixed to the plenum frame 334. The return medium connection 330 is mounted on a plate 336 that may include openings (nor shown) through which the connections 326, 328 extend. Incoming medium to inlet connections 326, 328 pass through the nozzles 338 which deliver the medium substantially evenly over the interior surface of the mandrel 94. Return medium passes through the connection 330 and 327 back to the diverter valve 322 (FIG. 23).

Referring to FIGS. 25-26, the diverter valve 322 includes a pair of hinged valve members 378, 380 respectively controlled by arms 374 and 376. A cool medium inlet 372 may be selectively opened to allow cool medium to flow into the valve 322. In the condition shown in FIG. 26, valve 380 is closed, and valve 378 is open to allow return medium received through the inlet 324 and to exit through the through the outlet 370 and thereby re-circulate during a heating cycle. The valve member 380 closes off the cool medium inlet 372 during the heating cycle.

FIG. 26 illustrates the condition of the diverter valve 322 when cool medium is delivered to the mandrel 194 during a cooling cycle. Valve 378 is moved to a second closed position which diverts the return medium received through inlet 324 out through a medium vent 375. Valve member 380 has also been moved to its open position, allowing cool medium to enter through the inlet 372 and pass through the outlet 370 for delivery to the mandrel 194.

Attention is now directed to FIGS. 26-30 which better illustrate details of the mandrel 194 and mounting of the mandrel base 342 on the mandrel carrier 286. Pins 351 (FIG. 30) on the mandrel carrier 286 are received within the sockets 348 (FIGS. 27 and 28) secured to brackets 346 fixed to the mandrel base 342. A position limiting pin 363 on the back side of the mandrel base 342 provides a third contact point between the mandrel base 342 and the mandrel carrier 286. The positioning pin 363 engages a stop 367 (FIG. 30) on the mandrel carrier 286. Ball joint connections formed between the sockets 348 and the pins 351 allow the mandrel 194 and the mandrel base 342 to expand along Y and Z axes shown in FIG. 30, while the limiting pin 363 restrains such movement along the X axis. The mandrel base 342 is designed to minimize deflection and react the force of the pressure system through the mandrel 194. As shown in FIG. 29, the mandrel 194 may include end brackets 352 each provided with a retaining pin 350. The retaining pins 350 are received within openings (not shown) in the composite sections 104a, 104b in order to maintain the composite sections 104a, 104b in aligned registration during the bonding process.

Referring to FIG. 31, the mandrel 194 is secured to the mandrel base 342 using fasteners (not shown). A sheet of insulation 358 along with spaced apart thermal barriers 364 are sandwiched between the mandrel 194 and the mandrel base 342 in order to insulate the mandrel 194 from the mandrel base 342.

FIGS. 31 illustrates the use of insulation 366 surrounding the bladder 198 which functions to assist in retaining heat in the area of the splice joint 110 (FIG. 10) during the curing process. In this example, heat required for curing of the splice member 112 (FIG. 10) may be provided only from the tool side (tool tower 235 in FIG. 15) using the heating system 284 previously described in connection with FIG. 23. In some applications, it may be necessary or desirable to place an optional heater element (not shown) between the bladder 198 and the surrounding insulation 366.

Referring now to FIG. 33, a removable bladder assembly 382 includes an inflatable bladder 198. The edges of the bladder 198 may be secured to a semi-rigid frame 199 which may be formed of a semi-flexible material. The bladder frame 199 is releasably held in the bladder shroud 224 by a series of retainers 386 which hold the frame 199 in snap fit relationship, allowing the bladder assembly 382 to be easily removed and/or replaced.

The bladder 198 may be a single bladder, or may comprise a redundant, double bladder of the type shown in FIGS. 33 and 34. The bladder frame retainers 386 are secured to the bladder shroud 224 and may have a substantially circular cross section. The bladder frame 199 may be formed of a semi-rigid material such as reinforced silicone and may include a circular groove (not shown) along its periphery which receives the retainer 386 in a snap fit relationship. A second inflatable inner bladder 398 may be positioned inside the first, outer bladder 198 for redundancy in the event that the first bladder 198 develops a leak. FIG. 35 illustrate the use of the insulation 366 to retain the heat that is generated through the mandrel 194 where heating is provided only on the tool side of the bonding machine 186.

Attention is now directed to FIG. 36 which illustrates an alternate example of a bladder frame 199 that may eliminate the need for use of the hold down plates 236 previously described in connection with FIG. 19. A pressure bladder 198 is attached to a bladder frame 199 supported on the shroud 224 along with the insulation 366. Bladder 198 bears against a composite section 104a which is captured between the bladder 198 and the mandrel 194. The frame 199 has a rigid flange 355 which includes a portion 394 overlying and bearing against the composite section 104a. The flange 355 may assist in bagging and may apply sufficient force against the composite section 104a to hold down composite section 104a against movement, thereby eliminating the need for the hold down plates 236.

Attention is now directed to FIG. 37 which illustrates the use of a shroud cart 388 to position the shroud 224 relative to the mandrel 194. The shroud cart 388 is manually positioned in the work area. After being raised to a working height, it is moved toward the mandrel 194. The cart 388 includes a portable base 390 mounted on rollers (not shown) and a lifting mechanism 388 powered by an actuator piston 391. The lifting mechanism 388 may be used to lift the shroud 224 to the desired height, while the portable base 390 may be used to move the shroud 224 into the position shown in FIG. 37 in readiness for a bonding operation. The lifting mechanism 388 may be compliant to allow subtle adjustments to the shroud position without imparting load onto the composite sections 104a, 104b or the mandrel 194. Locating devices 392a, 392b on the shroud 224 and the platform 288 to assure that the shroud 224 and the mandrel 194 may be in aligned relationship to each other when the shroud has been moved into its closed position.

FIGS. 38 and 39 illustrate the modular nature of the mandrel assembly and the heating system 284. As shown in FIG. 38, the platform 288 is in a retracted position, and the mandrel 194 is coupled with the heating system 284. In order to remove and/or replace the mandrel 194, the platform 288 is moved to its forward position on the base 290 as shown in FIG. 39. Then, the heating system 284 maybe disconnected from the mandrel 194, using the releasable connections 327.

Embodiments of the disclosure may find use in a variety of potential applications, particularly in the transportation industry, including for example, aerospace, marine and automotive applications. Thus, referring now to FIGS. 40 and 41, embodiments of the disclosure may be used in the context of an aircraft manufacturing and service method 400 as shown in Figure 40 and an aircraft 402 as shown in Figure 41. During pre-production, exemplary method 400 may include specification and design 404 of the aircraft 402 and material procurement 406. During production, component and subassembly manufacturing 408 and system integration 410 of the aircraft 402 takes place. Thereafter, the aircraft 402 may go through certification and delivery 412 in order to be placed in service 414. While in service by a customer, the aircraft 212 is scheduled for routine maintenance and service 416 (which may also include modification, reconfiguration, refurbishment, and so on).

Each of the processes of method 400 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 41, the aircraft 402 produced by exemplary method 400 may include an airframe 418 with a plurality of systems 420 and an interior 422. Examples of high-level systems 420 include one or more of a propulsion system 424, an electrical system 426, a hydraulic system 428, and an environmental system 430. Any number of other systems may be included. Although an aerospace example is shown, the principles of the disclosure may be applied to other industries, such as the marine and automotive industries.

Systems and methods embodied herein may be employed during any one or more of the stages of the production and service method 400. For example, components or subassemblies corresponding to production process 408 may be fabricated or manufactured in a manner similar to components or subassemblies produced while the aircraft 402 is in service. Also, one or more apparatus embodiments, method embodiments, or a combination thereof may be utilized during the production stages 408 and 410, for example, by substantially expediting assembly of or reducing the cost of an aircraft 402. Similarly, one or more of apparatus embodiments, method embodiments, or a combination thereof may be utilized while the aircraft 402 is in service, for example and without limitation, to maintenance and service 416.

Although the embodiments of this disclosure have been described with respect to certain exemplary embodiments, it is to be understood that the specific embodiments are for purposes of illustration and not limitation, as other variations will occur to those of skill in the art.

## Claims

1. Apparatus for joining elongate composite sections of a composite structural member, comprising:
a bonding machine (186) comprising a press for bonding an uncured composite splice member onto a joint between adjacent ends of two composite sections;
jigs (184) on opposite sides of the bonding machine for supporting the composite sections in end-to-end relationship;
and wherein the press is arranged to locally apply heat and pressure to bond the joint; wherein the press comprises:
a first platform (188) and a second platform (190) relatively movable between an open position and a closed position;
and wherein the bonding machine further comprises:
a tool (194) against which a part may be pressed, the tool being supported by the first platform;
at least a first bladder (198) adapted to be pressurized and supported by the second platform (190) for pressing the part against the tool;
means for heating the tool (192); and
a vacuum bag adapted to be placed over the splice member and evacuated to apply pressure to the splice member.

2. The apparatus of Claim 1 wherein the bonding machine (186) includes a mandrel (194) and alignment pins connecting the mandrel with the composite sections for maintaining the ends of the composite sections in a desired alignment within the bonding machine.

3. The apparatus of Claim 1 wherein the jigs (184) are arranged to support the composite sections along their lengths and maintain the composite sections in a desired alignment as the splice member is bonded onto the joint between the composite sections.

4. The apparatus of Claim 1 wherein the bonding machine (186) includes:
means (192, 196) for applying heat to the joint for curing the splice member, and
means for holding the composite sections against movement during curing.

5. The apparatus of Claim 4 wherein the means for holding the composite sections includes a pair of plates (236) spanning the joint and clamping the adjacent ends of the composite sections together.

6. The apparatus of Claim 1 wherein the apparatus further comprises:
first means (214, 215) for mounting the tool (194) on the first platform (188) for linear movement substantially horizontally toward and away from the part; and
second means (199, 222, 224) for mounting the first bladder (198) on the second platform (190) for linear movement toward and away from the part.

7. The apparatus of Claim 6 wherein the apparatus further comprises:
a frame (199) removably mounted on the second platform (190); and
wherein the first bladder (198) is attached to the frame and removable from the second platform along with the frame.

8. A method of joining two elongate composite sections, comprising:
supporting the composite sections in aligned, end-to-end relationship;
forming a joint between the composite sections by placing an uncured splice member over the adjoining ends of the composite sections;
pressing the splice member to the ends of the composite sections by a first platform (188) and a second platform (190) relatively movable between an open position and a closed position; and
applying heat and pressure to bond the joint; wherein supporting the composite sections includes:
positioning jigs (184) on opposite sides of the press; and
holding the composite sections in the jigs as the splice member is being bonded to the ends of the composite sections, and wherein
pressing the splice member further comprises:
supporting a tool by the first platform;
placing a vacuum bag over the splice member, and applying pressure to the splice member by evacuating the vacuum bag;
pressurizing at least a first bladder (198) supported by the second platform to press the part against the tool; and
heating the tool.

9. The method of Claim 8 wherein pressing the splice member includes:
positioning a pressure bladder (198) in the press over the splice member and the vacuum bag; and
applying pressure to the splice member by pressurizing the bladder.

10. The method of Claim 8 wherein forming a joint includes:
placing the splice member and the ends of the composite sections on a mandrel (194); and
applying heat to the joint includes directing a hot medium onto the mandrel.

11. The method of Claim 10 wherein applying heat to the joint includes:
recirculating the medium directed over the mandrel (194); and
heating the medium as it is re-circulated.

## Patentansprüche

1. Vorrichtung zum VerBondingn länglicher Verbundabschnitte eines Verbundkonstruktionselements, aufweisend:
eine Bondingmaschine (186), die eine Presse zum Bonden eines ungehärteten Verbundspleißelements an eine Verbindungsstelle zwischen benachbarten Enden von zwei Verbundabschnitten aufweist;
Spannvorrichtungen (184) an gegenüberliegenden Seiten der Bondingmaschine, welche die Verbundabschnitte in einer Ende-zu-Ende-Beziehung stützen;
und wobei die Presse eingerichtet ist, um lokal Wärme und Druck zum Bonden der Verbindungsstelle auszuüben, wobei die Presse aufweist:
eine erste Plattform (188) und eine zweite Plattform (190), die relativ zwischen einer offenen Position und einer geschlossenen Position bewegbar sind;
und wobei die Bondingmaschine des Weiteren aufweist:
ein Werkzeug (194), gegen das ein Teil gepresst werden kann, wobei das Werkzeug von der ersten Plattform gestützt wird;
zumindest einen ersten Balg (198), der eingerichtet ist, unter Druck gesetzt zu werden, und von der zweiten Plattform (190) gestützt wird, um das Teil gegen das Werkzeug zu pressen;
Mittel zum Erwärmen des Werkzeugs (192); und
einen Vakuumbeutel, der eingerichtet ist, über dem Spleißelement angeordnet und evakuiert zu werden, um Druck auf das Spleißelement auszuüben.

2. Vorrichtung nach Anspruch 1, wobei die Bondingmaschine (186) einen Dorn (194) und Ausrichtungsstifte enthält, die den Dorn mit den Verbundabschnitten verbinden, um die Enden der Verbundabschnitte in der Bondingmaschine in einer gewünschten Ausrichtung zu halten.

3. Vorrichtung nach Anspruch 1, wobei die Spannvorrichtungen (184) angeordnet sind, um die Verbundabschnitte entlang ihrer Längen stützen und die Verbundabschnitte in einer gewünschten Ausrichtung halten, wenn das Spleißelement an die Verbindungsstelle zwischen den Verbundabschnitten gebunden wird.

4. Vorrichtung nach Anspruch 1, wobei die Bondingmaschine (186) enthält:
Mittel (192, 196) zum Ausüben von Wärme auf die Verbindungsstelle zum Härten des Spleißelements, und
Mittel zum Halten der Verbundabschnitte gegen eine Bewegung während des Härtens.

5. Vorrichtung nach Anspruch 4, wobei das Mittel zum Halten der Verbundabschnitte ein Paar von Platten (236) enthält, die die Verbindungsstelle überspannen und die benachbarten Enden der Verbundabschnitte zusammenklemmen.

6. Vorrichtung nach Anspruch 1, wobei die Vorrichtung des Weiteren aufweist:
erste Mittel (214, 215) zum Anbringen des Werkzeugs (104) an der ersten Plattform (188) für eine lineare, im Wesentlichen horizontale Bewegung zum Teil hin und von diesem weg; und
zweite Mittel (199, 222, 224) zum Anbringen des ersten Balgs (198) an der zweiten Plattform (190) für eine lineare Bewegung zum Teil hin und von diesem weg.

7. Vorrichtung nach Anspruch 6, wobei die Vorrichtung des Weiteren aufweist:
ein Gestell (199), das entfernbar an der zweiten Plattform (190) angebracht ist; und
wobei der erste Balg (198) an dem Gestell befestigt und gemeinsam mit dem Gestell von der zweiten Plattform entfernbar ist.

8. Verfahren zum Verbinden von zwei länglichen Verbundabschnitten, aufweisend:
Stützen der Verbundabschnitte in einer ausgerichteten Ende-zu-Ende-Beziehung;
Bilden einer Verbindungsstelle zwischen den Verbundabschnitten durch Anordnen eines ungehärteten Spleißelements über den benachbarten Enden der Verbundabschnitte;
Pressen des Spleißelements an den Enden der Verbundabschnitte durch eine erste Plattform (188) und eine zweite Plattform (190), die relativ zwischen einer offenen Position und einer geschlossenen Position bewegbar sind; und
Ausüben von Wärme und Druck, um die Verbindungsstelle zu binden;
wobei das Stützen der Verbundabschnitte enthält:
Positionieren von Spannvorrichtungen (184) an gegenüberliegenden Seiten der Presse; und
Halten der Verbundabschnitte in den Spannvorrichtungen, während das Spleißelement an die Enden der Verbundabschnitte gebunden wird, und wobei das Pressen des Spleißelements des Weiteren aufweist:
Stützen eines Werkzeugs durch die erste Plattform;
Anordnen eines Vakuumbeutels über dem Spleißelement und Ausüben von Druck auf das Spleißelement durch Evakuieren des Vakuumbeutels;
Druckbeaufschlagen zumindest eines ersten Balgs (198), der von der zweiten Plattform gestützt wird, um das Teil gegen das Werkzeug zu pressen; und
Erwärmen des Werkzeugs.

9. Verfahren nach Anspruch 8, wobei das Pressen des Spleißelements enthält:
Positionieren eines Druckbalgs (198) in der Presse über dem Spleißelement und dem Vakuumbeutel; und
Ausüben von Druck auf das Spleißelement durch Druckbeaufschlagen des Balgs.

10. Verfahren nach Anspruch 8, wobei das Bilden einer Verbindungsstelle enthält:
Anordnen des Spleißelements und der Enden der Verbundabschnitte auf einem Dorn (194); und
das Ausüben von Wärme auf die Verbindungsstelle ein Lenken eines heißen Mediums auf den Dorn enthält.

11. Verfahren nach Anspruch 10, wobei das Ausüben von Wärme auf die Verbindungsstelle enthält:
Rezirkulieren des Mediums, das über den Dorn (194) gelenkt wird; und
Erwärmen des Mediums, während es rezirkuliert wird.

## Revendications

1. Appareil pour assembler des sections composites allongées d'un élément structurel composite, comprenant :
une machine de collage (186) comprenant une presse pour coller un élément éclisse composite non durci sur un joint entre des extrémités adjacentes de deux sections composites ;
des gabarits (184) sur des côtés opposés de la machine de collage pour supporter les sections composites dans une relation bout-à-bout ;
et la presse étant agencée pour appliquer localement de la chaleur et une pression pour coller le joint ; la presse comprenant :
une première plate-forme (188) et une seconde plate-forme (190) mobiles relativement entre une position ouverte et une position fermée ;
et la machine de collage comprenant en outre :
un outil (194) contre lequel une pièce peut être pressée, l'outil étant supporté par la première plate-forme ;
au moins une première vessie (198) apte à être mise sous pression et supportée par la seconde plate-forme (190) pour presser la pièce contre l'outil ;
des moyens pour chauffer l'outil (192) ; et
une poche à vide apte à être placée sur l'élément éclisse et mise sous vide pour appliquer une pression sur l'élément éclisse.

2. Appareil selon la revendication 1, dans lequel la machine de collage (186) comprend un mandrin (194) et des goupilles d'alignement reliant le mandrin aux sections composites pour maintenir les extrémités des sections composites dans un alignement souhaité à l'intérieur de la machine de collage.

3. Appareil selon la revendication 1, dans lequel les gabarits (184) sont agencés pour supporter les sections composites le long de leurs longueurs et maintenir les sections composites dans un alignement souhaité à mesure que l'élément éclisse est collé sur le joint entre les sections composites.

4. Appareil selon la revendication 1, dans lequel la machine de collage (186) comprend :
des moyens (192, 196) pour appliquer de la chaleur sur le joint pour faire durcir l'élément éclisse, et
des moyens pour retenir les sections composites vis-à-vis d'un mouvement pendant le durcissement.

5. Appareil selon la revendication 4, dans lequel les moyens pour retenir les sections composites comprennent une paire de plaques (236) chevauchant le joint et serrant les extrémités adjacentes des sections composites ensemble.

6. Appareil selon la revendication 1, dans lequel l'appareil comprend en outre :
des premiers moyens (214, 215) pour monter l'outil (194) sur la première plate-forme (188) pour un mouvement linéaire sensiblement horizontalement vers et à l'opposé de la pièce ; et
des seconds moyens (199, 222, 224) pour monter la première vessie (198) sur la seconde plate-forme (190) pour un mouvement linéaire vers et à l'opposé de la pièce.

7. Appareil selon la revendication 6, dans lequel l'appareil comprend en outre :
un châssis (199) monté de façon amovible sur la seconde plate-forme (190) ; et
la première vessie (198) étant fixée au châssis et apte à être retirée de la seconde plate-forme conjointement avec le châssis.

8. Procédé d'assemblage de deux sections composites allongées, comprenant :
supporter les sections composites dans une relation alignée bout-à-bout ;
former un joint entre les sections composites en plaçant un élément éclisse non durci sur les extrémités adjacentes des sections composites ;
presser l'élément éclisse sur les extrémités des sections composites par une première plate-forme (188) et une seconde plate-forme (190) mobiles relativement entre une position ouverte et une position fermée ; et
appliquer de la chaleur et une pression pour coller le joint ;
dans lequel supporter les sections composites comprend :
positionner des gabarits (184) sur des côtés opposés de la presse ; et
retenir les sections composites dans les gabarits à mesure que l'élément éclisse est collé sur les extrémités des sections composites, et
dans lequel presser l'élément éclisse comprend en outre :
supporter un outil par la première plate-forme ;
placer une poche à vide sur l'élément éclisse, et appliquer une pression sur l'élément éclisse par mise sous vide de la poche à vide ;
mettre sous pression au moins une première vessie (198) supportée par la seconde plate-forme pour presser la pièce contre l'outil ; et
chauffer l'outil.

9. Procédé selon la revendication 8, dans lequel presser l'élément éclisse comprend :
positionner une vessie de pression (198) dans la presse sur l'élément éclisse et la poche à vide ; et
appliquer une pression sur l'élément éclisse par mise sous pression de la vessie.

10. Procédé selon la revendication 8, dans lequel former un joint comprend :
placer l'élément éclisse et les extrémités des sections composites sur un mandrin (194) ; et
appliquer de la chaleur sur le joint comprend diriger un milieu chaud sur le mandrin.

11. Procédé selon la revendication 10, dans lequel appliquer de la chaleur sur le joint comprend :
faire recirculer le milieu dirigé sur le mandrin (194) ; et
chauffer le milieu lorsqu'il est recirculé.
